# EUROPEAN PATENT SPECIFICATION

(11) **EP 1 558 773 B1**
(45) Date of publication and mention of the grant of the patent: **01.08.2007**
(21) Application number: 03753717.2
(22) Date of filing: 01.10.2003
(51) Int. Cl.: C22B 3/08, C22B 23/00

(54) **HEAP LEACHING BASE METALS FROM LATERITE ORES**
HAUFENLAUGUNG VON BASISMETALLEN AUS LATERITERZEN
LIXIVATION EN TAS DE METAUX DE BASE A PARTIR DE MINERAIS LATERITIQUES

(30) Priority: 01.10.2002 AU 2002951754
(43) Date of publication of application: 03.08.2005
(73) Proprietor: European Nickel Plc, Bracknell RG12 1WA (GB)
(72) Inventor: PURKISS, Simon, Anthony, Roger, South Ascot SL5 9BD (GB)
(74) Representative: Lees, Kate Jane
(86) International application number: PCT/GB2003/004252
(87) International publication number: WO 2004/031422

(56) References cited:
- WO-A-00/48944
- WO-A-01/75184
- WO-A-96/41025
- GR-B- 1 001 555
- GR-B- 1 003 569
- US-A- 5 320 665
- YOUZBASHI A A ET AL: "LEACHING OF CU2O WITH AQUEOUS SOLUTION OF SULFUR DIOXIDE" METALLURGICAL TRANSACTIONS B. PROCESS METALLURGY, METALLURGICAL SOCIETY OF AIME. NEW YORK, US, vol. 24B, no. 4, 1 August 1993 (1993-08-01), pages 563-570, XP000387542

## Description

### Field of the Invention

The present invention relates to the heap leaching of base metals from oxide ores. More particularly, the present invention is particularly intended for application in the recovery of nickel and cobalt from lateritic ores.

### Background Art

The application of heap leaching techniques in the recovery of base metals, for example copper, from oxide ore deposits is well established. For example, if copper is the base metal of interest and the host rock is sufficiently oxidised, the oxide ore can be crushed to a suitable size, stacked in heaps and leached with a sulphuric acid solution (SME Minerals Processing Handbook, Ed. NL Weiss, Society of Mineral Engineers ISBN 0-89520-433-6).

It is often the case that the ore, after crushing, will contain a significant level of fine particulate material, such as clay or clay-like material. This material, if preventative steps are not taken, can interfere with the permeability of the heap, and consequently reduce the efficiency of the heap leach process. In dealing with such ores, it is common practice to agglomerate the ore with water or process solution, and with cement. The agglomeration is conducted in a agglomeration drum, immediately prior to stacking of the heap. In the agglomeration process the fine particles stick to the coarser particles and thereby make the subsequently formed heap more permeable to the leach process solution. The fines in the heap are immobilised during agglomeration and cannot then migrate and give rise to blinding of the heap, and/or channelling of leach solution, which may otherwise lead to long leach times and to incompletely leached pockets within the heap.

The practice of acid agglomeration in the treatment of base metal oxide ores also has a benefit in "kick starting" the leaching process itself. The acid added during agglomeration contributes towards the total acid demand of the leach process and thereby improves the kinetics of the leach.

During acid agglomeration the acid is typically added to the agglomeration drum as concentrated sulphuric acid. Water or process solution may also be added to the drum, usually at a time after addition of the acid. Agglomerated ore is typically stacked and left to cure for a period of up to several weeks. During the curing period, certain of the components of the ore that had been dissolved by the acid during the agglomeration process, re-precipitate and act to bind the ore together.

Having stacked the heap as described above, a network of irrigation pipes is laid over the heap. This allows a solution of sulphuric acid, at a suitable strength, to be applied to the heap to leach out the copper. The leach can take place over a period of a few months to several years. The pregnant leach solution reporting at the base of the heap may be recycled through the heap or sent for further treatment to recover the copper.

Conventionally, laterite ores and concentrates are subjected to either smelting, roasting or pressure acid leaching processing routes. The nature of laterite ores and concentrates have typically required processing options that are more aggressive than heap leaching.

It is now envisaged by the inventor and applicants that a heap leaching process similar to that described above may be applicable to the treatment of nickel and cobalt oxide ores, including laterite ores that are found in many locations around the world.

Whilst there has been some discussion directed to the heap leaching of laterite ores none appear to be commercialised. In a paper titled "Extraction of nickel and cobalt from Greek low-grade nickel oxide ores by heap leaching" (Canadian Institute of Mining, Sudbury, Canada XP002183410, pages 489 to 502) the authors, Agatzini-Leonardou, Dimaki and Boskos, describe a column leach (simulating a heap leach) of a low-grade nickel oxide ore with sulphuric acid at ambient temperature. International Patent Application PCT/US01/10137 discloses a heap leach of nickel containing laterite ore, again utilising a sulphuric acid leach. What is apparent from these disclosures is that whilst nickel recoveries are reasonable, the recoveries of cobalt and other metals is particularly poor.

The present invention has one object thereof to overcome the abovementioned problems associated with the prior art or to provide a useful alternative thereto.

Throughout the specification, unless the context requires otherwise, the word "comprise" or variations such as "comprises" or "comprising", will be understood to imply the inclusion of a stated integer or group of integers but not the exclusion of any other integer or group of integers.

### Disclosure of the Invention

In accordance with the present invention there is provided a method for the heap leaching of base metals from a laterite ore containing nickel and cobalt, the method characterised by the method steps of:
a) Establishing at least one heap of the laterite ore containing the base metals to be leached;
b) Irrigating at least one of the or each heaps with a leach solution consisting essentially of sulphuric acid and dissolved sulphur dioxide; and.
c) Providing at least one leach solution pond or other suitable container to which pregnant leach solution recovered at or near a base of the or each heap may be fed.

Preferably, a bleed of the pregnant leach solution from the or each heap may be passed to a base metal recovery circuit.

In one form of the invention, the ore may be been agglomerated with sulphuric acid prior to forming the or each heap.

The sulphur dioxide is preferably provided in the form of either sodium metabisulphite or burned elemental sulphur.

In one form of the invention sodium metabisulphite is added to a sulphuric acid leach solution prior to application to the or each heap.

The sodium metabisulphite may be provided such that the resulting leach solution contains between about 1 to 40g/l thereof, and preferably about 5g/l thereof.

Preferably, sodium metabisulphite is added regularly to the leach solution throughout the leach. The concentration of sodium metabisulphite in the leach solution is preferably maintained at or about 5g/l throughout the leach.

In one form of the present invention sodium metabisulphite is added regularly to the leach solution at intervals of about 2 weeks throughout the leach.

Preferably, the sulphuric acid leach solution is provided at a concentration of about 75g/l.

### Brief Description of the Drawings

The present invention will now be described, by way of example only, with reference to one embodiment of the present invention and the accompanying drawings, in which:-
Figure 1 is a diagrammatic representation of a simple leach circuit exemplifying the method of the present invention;
Figure 2 is a graphical representation of the comparative nickel leach kinetics obtained with leach solutions containing either 10g/l sodium metabisulphite plus 75g/l sulphuric acid, or with only 75g/l sulphuric acid;
Figure 3 is graphical representation of the comparative cobalt leach kinetics obtained with leach solutions containing either 10g/l sodium metabisulphite plus 75g/l sulphuric acid, or with only 75g/l sulphuric acid;
Figure 4 is a graphical representation of nickel recovery in Bottle Rolls Tests 1 to 7;
Figure 5 is a graphical representation of cobalt recovery in Bottle Rolls Tests 1 to 7; and
Figure 6 is a graphical representation of iron recovery in Bottle Rolls Tests 1 to 7.

### Best Mode(s) for Carrying Out the invention

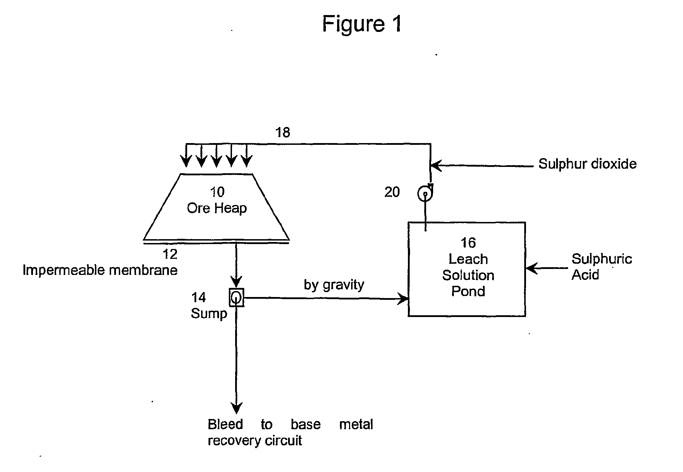

In Figure 1 there is shown a flow-sheet demonstrating one potential commercial application of a heap leach in accordance with the present invention. A heap 10 is stacked on an impermeable membrane 12 in known manner. Similarly, piping is provided to direct pregnant leach solution to a sump 14, from which the pregnant leach solution may flow by gravity to a leach solution pond 16, or may be bled from the leaching process to a base metal recovery circuit.

The heap 10 has arranged thereon a reticulation system 18 to feed the heap 10 with leach solution from the leach solution pond 16, via a pump 20. The sump 14 contains a pump (not shown).

The heap 10 is composed of laterite ore containing nickel and cobalt, the ore having been crushed to a size of 100% passing 0.25 inches and agglomerated with sulphuric acid prior to stacking.

The leach solution pond 16 is maintained at a suitable acid strength or pH by the addition of sulphuric acid. As leach solution is pumped via pump 20 and reticulation 18 to the ore heap 10, sulphur dioxide is introduced, whereby the level of acid and sulphur dioxide in solution is raised to a level determined by the user. The source of sulphur dioxide in the present example is sodium metabisulphite (SMS), although it is envisaged by the inventor and applicant that other sources of sulphur dioxide may be utilised, including burned elemental sulphur, and may include any means of producing sulphur dioxide in either a gaseous, liquid, or aqueous form.

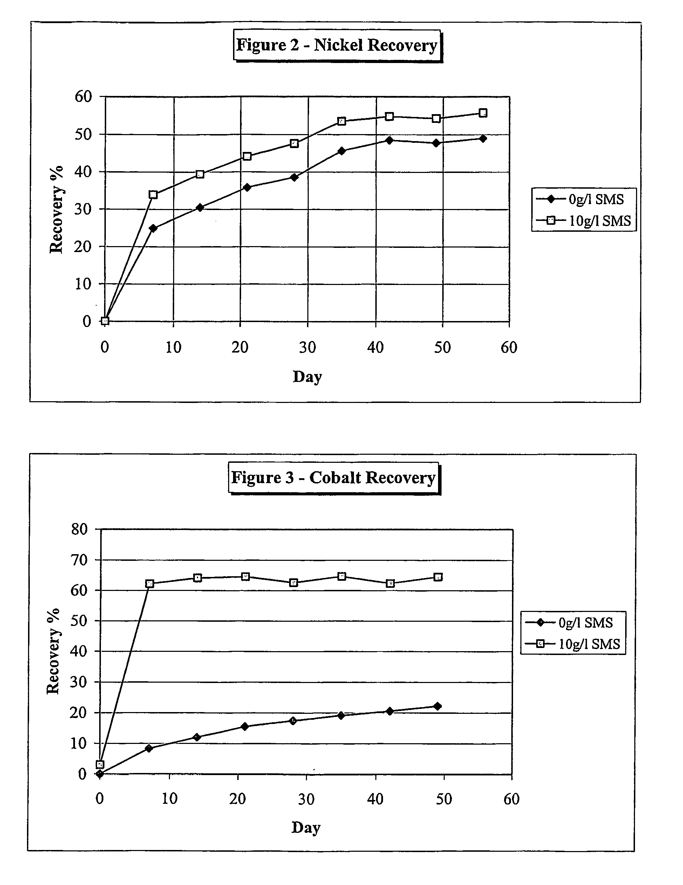

In Figures 2 and 3 are shown graphical representations of comparative leach kinetics for nickel and cobalt, respectively, when leached with either a combination of 10g/l sodium metabisulphite and 75g/l sulphuric acid, or with 75g/l sulphuric acid only, in a column leach simulation of a heap leach process.

As can be seen with reference to each of Figures 2 and 3, the use of a leach solution containing sodium metabisulphite in addition to sulphuric acid results in increased recoveries of both nickel and cobalt, with the most marked improvement being found with respect to cobalt recovery. The improved base metal recovery is evidenced almost immediately and remains throughout the period of the experiment, to fifty days or over.

Whilst the examples where conducted with 10g/l sodium metabisulphite it is envisaged that any level between about 1 to 40g/l sodium metabisulphite, or its equivalent dosage of sulphur dioxide, will achieve the objects of the invention. The inventor and applicant have also specifically found effectively identical results with 5g/l sodium metabisulphite in combination with sulphuric acid as the leach solution.

The mechanism by which the SMS contributes to recovery of the metal values is largely uncertain, although the inventor and applicant believe that the SMS contributes to the reduction of multivalent metals to their more soluble (and more reduced) species. For example, Co³⁺ may be reduced to Co²⁺, making it more soluble and consequently more readily leached.

It is also possible that the reduction of any MnO₂ present by the SMS, such that Mn⁴⁺ is reduced to the more soluble Mn²⁺, may destabilise the nickel and cobalt present, making it in turn more readily leached, or more readily reduced and then leached.

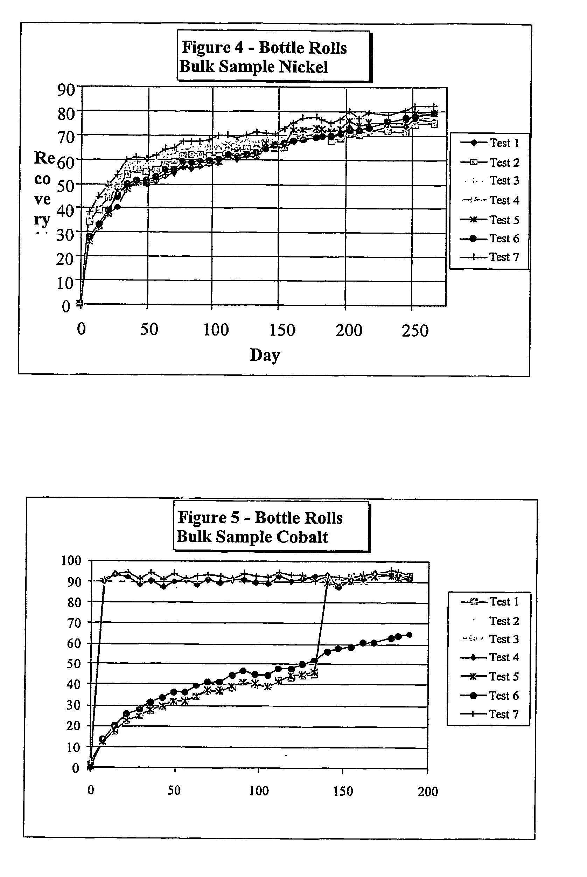

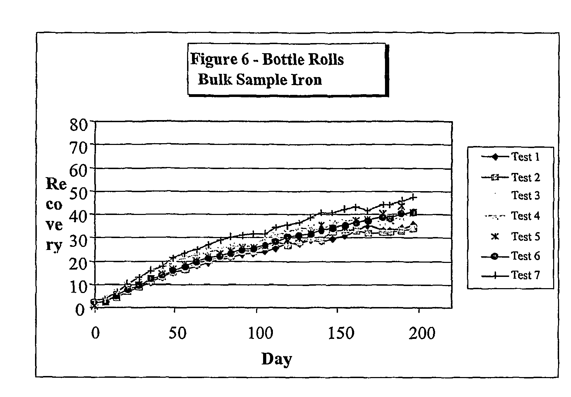

In Figures 4 to 6 are shown the results of Bottle Rolls testing undertaken on a sample of nickel containing ore so as to investigate further the conditions applicable for the method of the present invention.

The bottle rolls tests were undertaken using 150g of sample and 1.5 litres of 75 g/l sulphuric acid solution. The varied conditions for the seven tests are given below:
- Test 1 - standard test with 5g/l SMS added when leaching stops.
- Test 2 - standard test with 5g/l SMS added at start.
- Test 3 - standard test with 10g/l SMS added when leaching stops.
- Test 4 - standard tests with 10 g/l SMS added at start.
- Test 5-20 g/l SMS added when leaching stops
- Test 6-40 g/l SMS added when leaching stops
- Test 7 - staged addition, with 5g/l SMS added at beginning and repeatedly at two week intervals.

The tests were stopped after 266 days and recoveries of iron, nickel and cobalt are given in Table 1 and Figures 4, 5 and 6.

**Table 1-Bottle Rolls Leach recoveries on Bulk sample**

| Test | Recovery % | | |
|---|---|---|---|
| | Fe | Ni | Co |
| 1 | 39.9 | 76.0 | 95.2 |
| 2 | 39.1 | 75.2 | 94.8 |
| 3 | 47.6 | 79.1 | 94.5 |
| 4 | 44.1 | 77.7 | 94.4 |
| 5 | 47.0 | 79.5 | 93.9 |
| 6 | 48.7 | 79.4 | 79.5 |
| 7 | 53.6 | 82.6 | 93.8 |

Nickel recoveries ranged from 75.2% (Test 2) to 82.6% (Test 7). In general, it took approximately 35 days to recover 50% of the nickel but 160 days to recover 70% and 266 days to recover 75-80% of the nickel. Nickel recovery was still increasing marginally after 266 days. Maximum recovery was achieved in Test 7 where sodium metabisulphite (SMS) was added every 14 days.

Cobalt extraction was very rapid when SMS was added (Tests 2, 4 and 7) with cobalt recoveries of 90% after 14 days. Cobalt leaching was considerably slower when SMS was not added, typically with recoveries of 45-50% after 133 days. Addition of SMS at this time (Tests 1, 3 and 5) rapidly increased recovery to around 90%.

Iron recovery ranged from 39.1% (Test 2) to 53.6% (Test 7). Again, iron recovery was highest when SMS was added throughout the test. Acid consumptions ranged from 195kg/t (Test 3) to 310 kg/t (Test 5).

Modifications and variations such as would be apparent to the skilled addressee are considered to fall within the scope of the present invention.

## Claims

1. A method for the heap leaching of base metals from a laterite ore containing nickel and cobalt, the method **characterised by** steps of:
a) Establishing at least one heap of the laterite ore containing the base metals to be leached;
b) lrrigating at least one of the or each heaps with a leach solution consisting essentially of sulphuric acid and dissolved sulphur dioxide; and
c) Providing at least one leach solution pond or other suitable container to which pregnant leach solution recovered at or near a base of the or each heap may be fed.

2. A method according to claim 1, **characterised in that** a bleed of the pregnant leach solution recovered at or near a base of the or each heap may be passed to a base metal recovery circuit.

3. A method according to any one of the preceding claims, **characterised in that** the ore is agglomerated with sulphuric acid prior to forming the or each heap.

4. A method according to any one of the preceding claims, **characterised in that** the sulphur dioxide is provided in the form of either sodium metabisulphite or burned elemental sulphur.

5. A method according to claim 4, **characterised in that** sodium metabisulphite is added to a sulphuric acid leach solution prior to application to the or each heap.

6. A method according to claim 4 or 5, **characterised in that** the sodium metabisulphite is provided such that the resulting leach solution contains between about 1 to 40g/l thereof.

7. A method according to claim 6 **characterised in that** the sodium metabisulphite is provided such that the resulting leach solution contains about 5g/l thereof.

8. A method according to any one of claims 4 to 7, **characterised in that** sodium metabisulphite is added regularly to the leach solution throughout the leach.

9. A method according to claim 8, **characterised in that** the concentration of sodium metabisulphite in the leach solution is maintained at or about 5g/l throughout the leach.

10. A method according to claim 8 or 9, **characterised in that** sodium metabisulphite is added regularly to the leach solution at intervals of about 2 weeks throughout the leach.

11. A method according to any one of the preceding claims, **characterised in that** the sulphuric acid leach solution is provided at a concentration of about 75g/l.

## Patentansprüche

1. Verfahren zur Haufenauslaugung von Basismetallen aus einem Lateriterz, das Nickel und Cobalt enthält, wobei das Verfahren durch die nachfolgenden Schritte **gekennzeichnet** ist:
a) ein Errichten von mindestens einem Haufen des Lateriterzes, das die Basismetalle enthält, die ausgelaugt werden sollen;
b) ein Benetzen von mindestens einem der jeweiligen oder von einem jeden Haufen mit einer Auslaugungslösung, die im Wesentlichen aus Schwefelsäure und aus gelöstem Schwefeldioxid besteht; und
c) ein Bereitstellen von mindestens einem Becken oder einem anderen geeigneten Behälter mit einer Auslaugungslösung, welchen die Mutterauslaugungslösung, die an der Basis oder nahe bei der Basis des Haufens oder eines jeden Haufens zurückgewonnen wird, zugeführt werden kann.

2. Verfahren gemäß Anspruch 1, **dadurch gekennzeichnet, dass** ein abgezweigter Anteil der Mutterauslaugungslösung, welcher an der Basis oder nahe bei der Basis des Haufens oder eines jeden Haufens zurückgewonnen worden ist, einem Rückgewinnungskreislauf für Basismetall zugeleitet werden kann.

3. Verfahren gemäß irgendeinem der vorhergehenden Ansprüche, **dadurch gekennzeichnet, dass** das Erz vor dem Bilden des Haufens oder eines jeden Haufens zusammen mit Schwefelsäure agglomeriert wird.

4. Verfahren gemäß irgendeinem der vorhergehenden Ansprüche, **dadurch gekennzeichnet, dass** das Schwefeldioxid bereitgestellt wird in der Form von entweder Natriummetabisulfit oder von gebranntem, elementarem Schwefel.

5. Verfahren gemäß Anspruch 4, **dadurch gekennzeichnet, dass** das Natriummetabisulfit zu einer aus Schwefelsäure bestehenden Auslaugungslösung hinzugefügt wird bevor dieselbe bei dem oder bei einem jeden Haufen zur Anwendung kommt.

6. Verfahren gemäß Anspruch 4 oder 5, **dadurch gekennzeichnet, dass** das Natriummetabisulfit derart bereitgestellt wird, dass die resultierende Auslaugungslösung ungefähr zwischen 1 bis 40 g/l von demselben enthält.

7. Verfahren gemäß Anspruch 6, **dadurch gekennzeichnet, dass** das Natriummetabisulfit derart bereitgestellt wird, dass die resultierende Auslaugungslösung ungefähr 5 g/l von demselben enthält.

8. Verfahren gemäß irgendeinem der Ansprüche 4 bis 7, **dadurch gekennzeichnet, dass** das Natriummetabisulfit regelmäßig über die ganze Auslaugung hinweg zu der Auslaugungslösung hinzu gegeben wird.

9. Verfahren gemäß Anspruch 8, **dadurch gekennzeichnet, dass** die Konzentration an Natriummetabisulfit in der Auslaugungslösung über die ganze Auslaugung hinweg bei oder in etwa bei 5 g/l gehalten wird.

10. Verfahren gemäß Anspruch 8 oder 9, **dadurch gekennzeichnet, dass** Natriummetabisulfit regelmäßig über die ganze Auslaugung hinweg in Zeitintervallen von etwa 2 Wochen zu der Auslaugungslösung hinzu gegeben wird.

11. Verfahren gemäß irgendeinem der vorhergehenden Ansprüche, **dadurch gekennzeichnet, dass** die aus Schwefelsäure bestehende Auslaugungslösung in einer Konzentration von ungefähr 75 g/l bereitgestellt wird.

## Revendications

1. Procédé pour la lixiviation en tas de métaux de base à partir d'un minerai latéritique contenant du nickel et du cobalt, le procédé étant **caractérisé par** les étapes:
a) d'établissement d'au moins un tas du minerai latéritique contenant les métaux de base à lixivier;
b) d'irrigation d'au moins un des ou de chaque tas avec une solution de lixiviation constituée essentiellement d'acide sulfurique et de dioxyde de soufre dissous; et
c) de fourniture d'au moins un bassin de solution de lixiviation ou d'un autre récipient approprié auquel une solution de lixiviation enrichie récupérée à ou près d'une base du ou de chaque tas peut être alimentée.

2. Procédé suivant la revendication 1, **caractérisé en ce qu'**une purge de la solution de lixiviation enrichie récupérée à ou près d'une base du ou de chaque tas peut être passée vers un circuit de récupération de métaux de base.

3. Procédé suivant l'une quelconque des revendications précédentes, **caractérisé en ce que** le minerai est aggloméré avec de l'acide sulfurique avant la formation du ou de chaque tas.

4. Procédé suivant l'une quelconque des revendications précédentes, **caractérisé en ce que** le dioxyde de soufre est fourni sous la forme soit de métabisulfite de sodium, soit de soufre élémentaire brûlé.

5. Procédé suivant la revendication 4, **caractérisé en ce que** le métabisulfite de sodium est ajouté à une solution de lixiviation d'acide sulfurique avant une application au ou à chaque tas.

6. Procédé suivant la revendication 4 ou 5, **caractérisé en ce que** le métabisulfite de sodium est fourni de sorte que la solution de lixiviation résultante contient entre environ 1 et 40 g/l de celui-ci,

7. Procédé suivant la revendication 6, **caractérisé en ce que** le métabisulfite de sodium est fourni de sorte que la solution de lixiviation résultante contient environ 5 g/l de celui-ci.

8. Procédé suivant l'une quelconque des revendications 4 à 7, **caractérisé en ce que** le métabisulfite de sodium est ajouté régulièrement à la solution de lixiviation pendant toute la lixiviation.

9. Procédé suivant la revendication 8, **caractérisé en ce que** la concentration du métabisulfite de sodium dans la solution de lixiviation est maintenue à ou environ à 5 g/l pendant toute la lixiviation.

10. Procédé suivant la revendication 8 ou 9, **caractérisé en ce que** le métabisulfite de sodium est ajouté régulièrement à la solution de lixiviation à des intervalles d'environ 2 semaines pendant toute la lixiviation.

11. Procédé suivant l'une quelconque des revendications précédentes, **caractérisé en ce que** la solution de lixiviation d'acide sulfurique est apportée à une concentration d'environ 75 g/l.
